# EUROPÄISCHE PATENTSCHRIFT

(11) **EP 0 856 929 B1**
(45) Veröffentlichungstag und Bekanntmachung des Hinweises auf die Patenterteilung: **09.07.2003**
(21) Anmeldenummer: 98100789.1
(22) Anmeldetag: 19.01.1998
(51) Int. Cl.: H02H 3/44

(54) **Vorrichtung zur schnellen Fehlerortung in Starkstromnetzen**
Fault location arrangement in a power system
Dispositif de location de faute dans un réseau de courant fort

(30) Priorität: 30.01.1997 DE 19703347
(43) Veröffentlichungstag der Anmeldung: 05.08.1998
(73) Patentinhaber: Dipl.-Ing. H. Horstmann GmbH, 42797 Heiligenhaus (DE)
(72) Erfinder: Horstmann, Werner, Dipl.-Ing., 45219 Essen (DE)
(74) Vertreter: Patentanwälte Dr. Solf & Zapf

(56) Entgegenhaltungen:
- WO-A-91/02395
- WO-A-91/07795

## Beschreibung

Die Erfindung betrifft eine Vorrichtung zur schnellen Fehlerortung in mehrphasigen Starkstromnetzen mit Meßwertgebern und Gleichrichtern, denen Signalspeicher, eine Signalverarbeitungseinheit und eine Anzeigeeinheit nachgeschaltet sind, wobei ein im Eingangsbereich anliegendes Gleichstromsignal einer Auswertestufe zugeführt ist, welche bei schnellen Stromänderungen ein Signal abgibt, sowie eine Ablaufsteuerung und eine Zeitstufe vorhanden sind, um das Signal von vorübergehenden Überströmen zu eliminieren, und zwar derart, dass die Ablaufsteuerung einer "Puls/Pause/Zero-Bedingung" gehorcht, so dass nach einem Impuls und einer Pause ein Anzeigebefehl nur durchgeschaltet wird, wenn ein nach der Pause gemessener Phasenstrom in einem Zeitfenster oder für die Dauer der gesamten Rückstellzeit den Wert Null hatte.

Im weitverzweigten Stromversorgungsnetz gibt es insbesondere auf der Mittelspannungsebene eine Vielzahl von Schalt- und Verteilerstationen, deren Stränge die einzelnen Verbrauchergruppen beliefern. Die stromführenden Leitungen sind heute vorwiegend als Erdkabel verlegt. Es gibt aber auch noch - besonders im ländlichen Bereich - sehr viele Freileitungen. Beim Auftreten von Fehlern im Gesamtsystem ist es wichtig, den Fehlerort einzugrenzen und vor allem Kurzschlüsse von vorübergehenden Überströmen zu unterscheiden.

Bei einigen der bisher bekannt gewordenen Kurzschlußanzeigern ist der Strom, bei dem eine Anzeige erfolgt (Ansprechwert) entweder fest vorgegeben oder es können bestimmte Werte eingestellt werden. Im allgemeinen benötigt der Netzbetreiber Kurzschlußanzeiger mit ganz unterschiedlichen Ansprechwerten. Dies hängt einmal vom Leiterquerschnitt ab, zum anderen aber auch von der durchschnittlichen Belastung am Einsatzort. Dies ist dadurch bedingt, dass z. B. von einer Einspeisestelle aus die Belastung entlang der Strecke wegen der Abzweigungen für die Verbraucher in Stufen abnimmt. Zum anderen ist es von Zeit zu Zeit erforderlich, der veränderten Netzbelastung durch neu hinzukommende oder stillgelegte Verbraucher Rechnung zu tragen, indem man die Grenzwerte anhebt oder reduziert.

Um die Ansprechwerte der Kurzschlußanzeiger richtig zu dimensionieren, musste für jeden Kabelstrang eine Kurzschlußstromberechnung durchgeführt werden. Die Berechnung ist aufwändig und wird durch selbstjustierende Kurzschlußanzeiger überflüssig.

In der Praxis erfolgt die Veränderung der Ansprechwerte z. B. dadurch, dass man im Gerät, in dem eine Klemmenreihe vorgesehen ist, eine Brücke umsetzt oder das Gerät neu einjustiert.

Es ist nachteilig, dass man entweder Geräte mit verschiedenen Ansprechwerten einlagern muss oder dass man fortlaufend installierte Geräte öffnen muss, um sie zu verstellen. Letzteres bereitet auch insofern Probleme, als die zu dem Kurzschlußanzeiger gehörenden Messwertgeber auf Kabeladern oder Freileitungen angeordnet sind, die unter einer Hochspannung von 5 - 50 kV stehen.

Eine Weiterentwicklung stellen Kurzschlußanzeiger dar, die di/dt-Ansprechverhalten haben. Diese brauchen nicht mehr auf diskrete Werte fest justiert zu werden. Sie weisen aber den Nachteil auf, dass hohe Einschaltströme zur Fehlanzeige eines Kurzschlußes führen.

Aus der WO 91/02395 A ist eine Vorrichtung der gattungsgemäßen Art bekannt, bei der eine Auswertestufe zur Erkennung eines di/dt-Wertes vorhanden ist. Der Auswertestufe ist unmittelbar eine Speicherstufe nachgeschaltet. Die Ablaufsteuerung ist weiterhin mit Verknüpfungsgliedern verbunden. Mit einer derartigen Vorrichtung ist es jedoch nicht möglich, einen Kurzschluß von einem Erdschluß zu unterscheiden. Im Mittelspannungsbereich, insbesondere bei 24kV-Leitungen, können zudem Spannungsverschleppungen nicht wirksam verhindert werden.

Die WO 91/07795 beschreibt eine Vorrichtung zur Fehlerortung in mehrphasigen Starkstromnetzen. In allen Phasen des mehrphasigen Starkstromnetzes ist die identische Vorrichtung zur Fehlerortung angebracht, so dass eine bezüglich der einzelnen Phasen getrennte Auswertung möglich ist. Auch hier werden jedoch Spannungsverschleppungen nicht wirksam verhindert.

Der Erfindung liegt die Aufgabe zu Grunde, die Nachteile der bekannten Kurzschlußstromanzeiger zu vermeiden, zeitaufwändiges Nachjustieren der Geräte einzusparen, die Lagerhaltung zu minimieren, einfache Maßnahmen gegen eine Spannungsverschleppung vorzusehen und - insbesondere in Kombination mit einem Erdschlußanzeiger - selbstjustierenden Kurzschlußanzeiger mit Einschaltstromunterdrückung zu schaffen.

Die Aufgabe wird dadurch gelöst, dass jedem Netz-Phasenleiter eine Auswertestufe zugeordnet ist, dass jeder Auswertestufe ein Spannungstrennelement nachgeschaltet ist, dass jedes der Spannungstrennelemente sowohl mit einer Speicherstufe, als auch über eine Oderstufe mit der Ablaufsteuerung und der Zeitstufe der Vorrichtung verbunden ist, und dass ein Verstärker zur Stromabfrage vorgesehen ist, der über die Ablaufsteuerung bei vorhandenem Strom die Speicherstufen zurücksetzt.

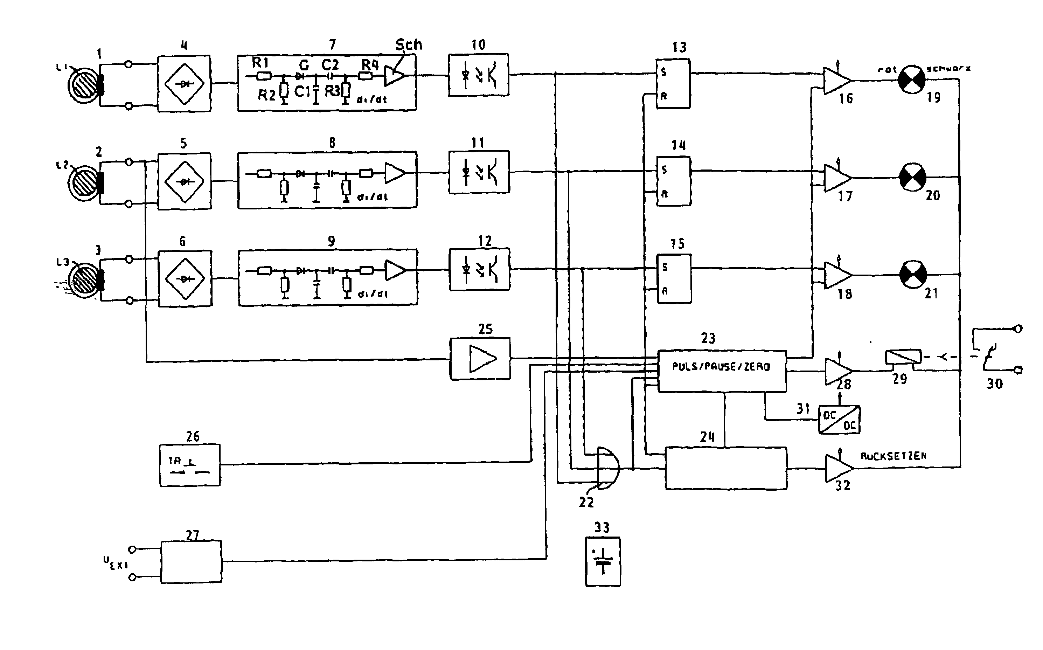

Ein Ausführungsbeispiel der Erfindung wird an Hand der Zeichnung dargestellt. Sie zeigt das Blockschaltbild einer Vorrichtung zur schnellen Fehlerortung in einem Mittelspannungs-Dreiphasennetz.

Die drei Phasenleiter eines zu überwachenden Stranges sind mit L1, L2, L3 bezeichnet. Auf die Leiter sind Stromwandler der Meßwertgeber 1, 2, 3 aufgesetzt. Die in den Sekundärwicklungen fließenden meßwertproportionalen Wechselströme werden in Brückengleichrichtern 4, 5, 6 gleichgerichtet und Auswertestufen 7, 8, 9 zugeführt.

Jede dieser Auswertestufen 7, 8, 9 besteht aus einem ersten ohmschen Spannungsteiler R1, R2, einem Gleichrichter G, einem kapazitiven Spannungsteiler C1, C2, einem weiteren ohmschen Spannungsteiler R3, R4 und einer Schaltstufe Sch.

Der dem Netzstrom proportionale Gleichstrom erzeugt in dem ersten ohmschen Spannungsteiler R1, R2 eine Gleichspannung, die den Kondensator C1 auflädt. Ein weiterer Kondensator C2 ist über den Spannungsteiler R3, R4 mit der Schaltstufe Sch verbunden. Das Netzwerk aus Widerständen und Kondensatoren stellt ein Differenzglied dar, bildet also di/dt.

Langsame Änderungen des Eingangsstromes führen zu einer gewissen Aufladung des Kondensators C1, die aber über die Strecke C2, R3 langsam wieder abgebaut wird. Bei schnellen Stromänderungen di/dt wird die Spannung am Kondensator C1 so hoch, dass die Schaltstufe Sch durchschaltet und einen Optokoppler 10 aktiviert. Weitere Optokoppler 11, 12 sind den Auswertestufen 8, 9 nachgeschaltet.

Die Optokoppler 10, 11, 12 sind vorzugsweise mit Glasfasersignalstrecken ausgestattet, so daß sie die übliche Mittelspannung von 24 kV sicher abblocken können Diese Optokoppler trennen nicht nur die Meßwertgeber von der nachgeschalteten Auswerteelektronik, sie verhindern auch eine galvanische Kopplung zwischen den Meßwertgebern der drei Phasen.

Die von den Optokopplern ausgehenden Überstromsignale werden den Set-Eingängen von Speichern 13, 14, 15 zugeführt. Ihr Ausgang ist mit einem Eingang von Treiberstufen 16, 17, 18 verbunden, die Schauzeichen 19, 20, 21 aktivieren Die Ausgänge der Optokoppler 10, 11, 12 sind zusätzlich mit einer Oderstufe 22 verbunden, deren Ausgang sowohl zu einer Ablaufsteuerung 23 als auch zu einer Zeitstufe 24 führt. Diese Zeitstufe 24 ist mit den Reset-Eingängen der Speicher 13, 14, 15 und auch mit der Ablaufsteuerung 23 verbunden.

Ein Verstärker 25 liegt mit seinem Eingang am Meßwertgeber 2. Der Ausgang greift in die Ablaufsteuerung ein.

Ein Taster 26 kann der Ablaufsteuerung den Befehl übermitteln, die gesetzten Schauzeichen zurückzustellen oder die Schauzeichen zu setzen (Funktionstest).

Ein Fremdspannungsrücksteller 27, der von einer externen Spannungsquelle Uₑₓₜ beaufschlagt wird, dient der Fernrückstellung der Schauzeichen.

Am Ausgang der Ablaufsteuerung 23 liegt zusätzlich eine Treiberstufe 28, die zeitgleich mit den Stufen 16 - 18 aktiviert wird und ein Relais 29 betätigt, dessen Kontakt 30 eine Fernmeldung der Anzeige ermöglicht.

Ein Gleichspannungswandler 31 wird ebenfalls durch die Ablaufsteuerung 23 aktiviert, um die Versorgungsspannung für die Schauzeichen 19, 20, 21 und das Relais 29 zu liefern.

Die Schauzeichen 19, 20, 21 sind bistabile Anzeigeelemente, die im nicht gesetzten Zustand eine schwarze Fläche darbieten. Durch die Setzimpulse der Treiberstufen 16, 17, 18 werden die Schauflächen magnetisch umgeklappt, so daß eine rote Signalfläche sichtbar wird. Um diese Anzeige zu löschen, die Flächen also zurückzuklappen, wird ein umgepolter Impuls benötigt. Diese Rücksetzimpulse liefert eine von der Zeitstufe 24 gesteuerte Treiberstufe 32.

Falls das Relais 29 als Haftrelais ausgebildet ist, dienst der Rücksetzimpuls zugleich dazu, das Relais zum Abfall zu bringen und auch die Fernanzeige zu löschen. Statt eines Relais kann auch ein Halbleiterschalter, insbesondere ein Transistor in Open-Collector-Schaltung eingesetzt werden.

Die Schauzeichen 19 - 21 benötigen im gesetzten wie im ungesetzten Zustand keinerlei Ruhestrom

Die gesamte Auswerteelektronik, die nur digitale Signale verarbeitet, ist sehr störunempflindlich und verbraucht außerordentlich wenig Strom im statischen Zustand.

Die Auswerteelektronik kann aus einzelnen CMOS-Logikschaltkreisen und zeitbestimmenden RC-Gliedern bestehen oder aber aus einem programmierten Schaltkreis (Microcontroller) oder Prozessor, der den Aufwand an Bauelementen erheblich reduziert Ferner kann auf Kundenanforderungen, wie andere zeitliche Abläufe oder andere Zeiten im Gerät, schnell reagiert werden, ohne das Schaltungsdesign zu ändern, da nur das Programm geändert werden muß. Zusätzlich kann der programmierte Schaltkreis eine Prüfung von Schaltungsteilen durchführen und den Zustand über eine Leuchtdiode signalisieren.

Die Anzahl der Überstromanregungen, der Kurzschlußanzeige und der Funktionstestzyklen kann gespeichert werden. Die Angaben können zu Servicezwecken werksseitig ausgelesen und als Analyse bzw. Statistik ausgewertet werden.

Durch den geringen Stromverbrauch wird es möglich, daß man mit einer eingebauten Lithiumbatterie 33 eine wartungslose Betriebsdauer von etwa 15 Jahren erreichen kann.

Die den Optokopplern 10 - 12 nachgeschaltete Auswerteelektronik arbeitet wie folgt:

Jeder Meßwertgeber 1, 2 oder 3 kann einen Überstromimpuls liefern, der in den Speichern 13, 14, oder 15 abgelegt wird. Unabhängig davon, ob ein, zwei oder drei Impulse anliegen, startet die Oder-Stufe 22 die Ablaufsteuerung 23 und die Zeitstufe 24. Damit wird das sogenannte "Puls/Pause/Zero-Verfahren" in Gang gesetzt.

Beim Eingang eines Überstromsignals startet die Zeitstufe 24, die nach einer Verzögerungszeit von 1 - 5 Sekunden (Pause) den Verstärker 25 einschaltet. Liefert dieser für eine Dauer von 100 - 500 ms eine Meßwertgeberspannung ab, erkennt er also einen Betriebsstrom, so veranlaßt dieses Signal in der Ablaufsteuerung 23, daß Reset-Impulse auf die Speicher 13 - 15 gelangen.

Mit anderen Worten werden die Speicherelemente dann zurückgesetzt, wenn das Ereignis im überwachten Netz nur ein vorübergehender Überstrom war.

Wenn jedoch nach einem echten Kurzschluß kein Betriebsstrom in einem Zeitfenster erkannt wird, gibt die Ablaufsteuerung 23 den Befehl zur Anzeige an die Treiberstufen 16, 17, 18, an das Relais 29 und den Gleichspannungswandler 31 weiter. Je nach dem Belegungszustand der Speicher 13, 14, 15 werden nun ein, zwei oder alle drei Schauzeichen gesetzt.

Wenn das Relais 29 als Haftrelais ausgebildet ist, gibt es über seinen Kontakt 30 einen sogenannten Fernmeldedauerkontakt ab.

Wird ein normales Relais benutzt, so liefert es über den Anregeimpuls lediglich einen Wischkontakt, der dann beim Empfänger in eine Daueranzeige umgewandelt wird.

Nach der Anregung bleibt die Zeitstufe 24 aktiv, bis die eingestellte Ablaufzeit von z B 1, 2, 4 oder 8 Stunden vergangen ist. Dann wird die Treiberstufe 32 eingeschaltet, die die Rücksetzung bewirkt.

Wird der Fehler vor dem Ablauf der eingestellten Zeit gefunden und beseitigt, kann das Personal die Rückstellung über den Taster 26 oder den Fremdspannungsrücksteller 27 bewirken, oder die Betriebsstromerkennung ist für die Dauer der gesamten Rückstellzeit

aktiv und kann so das Gerät zurückstellen, wenn Strom erkannt wird.

Der Gegenstand der Erfindung ist nicht auf das dargestellte Ausführungsbeispiel beschränkt. Wird ein Microcontroller verwendet, kann - mit einer entsprechenden Software - auch eine Auswertung der Oberschwingungen auf dem Energiekabel oder der dreiphasigen Meßwertgeberspannungen im Fehlerfall erfolgen, die für einen Erdschluß charakteristisch sind. Voraussetzung hierfür sind Meßwertgeber, die einen entsprechenden Frequenzbereich übertragen können

Die Pausenzeit nach dem Anregeimpuls (1 - 5 s) richtet sich erstens danach, wie lange es dauert, bis Ausgleichsvorgänge auf dem Mittelspannungsnetz abgeklungen sind, und zweitens, nach welcher Pausenzeit die Wiederzuschaltung (im Falle der Kurzunterbrechung) bei Freileitungen erfolgt. Das Stromsignal aus dem Verstärker 25 sollte für mehrere Perioden anliegen, um Störungen zu unterdrücken.

Die angegebenen Zeiten stellen nur bevorzugte, beispielhafte Werte dar.

Da in den meisten Anwendungsfällen die gestörten Strecken dreiphasig ab- oder zugeschaltet werden, ist nur ein Kanal zur Stromrückstellung vorgesehen. Man könnte aber auch alle drei Leiter einzeln abfragen. Es kann außerdem zweckmäßig sein, hier einen weiteren Optokoppler vorzusehen.

Wenn man anstelle der Batterie 33 die Schaltung aus dem Niederspannungsnetz versorgt, bietet es sich an, statt der mechanischen Schauzeichen Leuchtdioden, Blinkdioden oder eine LCD-Anzeige zu benutzen. Ein Speicherkondensator kann dazu dienen, die Schauzeichen bei Kurzschluß und Spannungsausfall zu setzen.

Die Folgen einer anderen Versorgungsstörung im Niederspannungsnetz könnte man mit einem eingebauten Akkumulator und/oder Kondensator vermeiden.

Auch könnte an der kapazitiven Schnittstelle der Schaltanlage oder vor der Niederspannungsseite des Transformators ein Impuls abgeleitet werden, der bei Spannungsrückkehr die Rückstellung bewirkt

Ferner kann der Taster dazu dienen, die Funktion des Gerätes zu testen.

Die in dem Ausführungsbeispiel genannten Schaltelemente können in einem programmierbaren Schaltkreis (Mikrokontroller) zusammengefaßt werden.

Als Spannungstrennelemente kommen außer Optokopplern auch induktive Einheiten Infrage Statt der Stromwandler in den Meßwertgebern sind auch Hallgeneratoren einsetzbar

Das Relais 29 kann gegen einen Halbleiterschalter, bestehend aus einem Transistor mit Open-Collector, einem Optotriac oder Optothyristor ausgetauscht werden. Die Fernmeldung kann durch einen Funksignalgeber erfolgen, dessen Wellen drahtlos oder leitungsgebunden übertragen werden.

Wenn die Vorrichtung zur Fehlerortung ein Display mit LED- oder Flüssigkristall-Anzeige erhält, empfiehlt es sich, periodisch oder auf Abruf weitere elektrische Größen, beispielsweise die Betriebsspannung, die Niederspannung oder die Batteriespannung, die Betriebsfrequenz und ggf. die Phasenlage der Leiterspannungen anzuzeigen

Das neuartige Kurzschlußanzeigegerät kann in allen Schaltstationen ohne Anpassung eingesetzt werden, paßt sich selbsttätig wechselnden Netzbelastungen an und kann klar zwischen Überströmen, z.B. Einschaltstromstößen, und Kurzschlüssen unterscheiden.

### Bezugszeichenliste

- C1, C2: Kondensatoren
- G: Gleichrichter
- L1, L2, L3: Leiter
- R1, R2, R3, R4: Widerstände
- Sch: Schaltstufe

- 1, 2, 3: Meßwertgeber
- 4, 5, 6: Brückengleichrichter
- 7, 8, 9: Auswertestufen
- 10, 11, 12: Spannungstrennelemente (Optokoppler)
- 13, 14, 15: Speicherstufen
- 16, 17, 18: Treiberstufen
- 19, 20, 21: Anzeigeeinheiten (Schauzeichen)
- 22: Oderstufe
- 23: Ablaufsteuerung
- 24: Zeitstufe
- 25: Verstärker
- 26: Taster
- 27: Fremdspannungsrücksteller
- 28: Treiberstufe
- 29: Relais
- 30: Relaiskontakt
- 31: Gleichspannungswandler
- 32: Treiberstufe
- 33: Lithiumbatterie

## Patentansprüche

1. Vorrichtung zur schnellen Fehlerortung in mehrphasigen Starkstromnetzen mit Meßwertgebern und Gleichrichtern, denen Signalspeicher, eine Signalverarbeitungseinheit und eine Anzeigeeinheit nachgeschaltet sind, wobei ein im Eingangsbereich anliegendes Gleichstromsignal einer Auswertestufe (7) zugeführt ist, welche bei schnellen Stromänderungen ein Signal abgibt, sowie eine Ablaufsteuerung (23) und eine Zeitstufe (24) vorhanden sind, um das Signal von vorübergehenden Überströmen zu eliminieren, und zwar derart, dass die Ablaufsteuerung (23) einer "Puls/Pause/Zero-Bedingung" gehorcht, so dass nach einem Impuls und einer Pause ein Anzeigebefehl nur durchgeschaltet wird, wenn ein nach der Pause gemessener Phasenstrom in einem Zeitfenster oder für die Dauer der gesamten Rückstellzeit den Wert Null hatte,
**dadurch gekennzeichnet,**
- **dass** jedem Phasenleiter des Starkstromnetzes eine Auswertestufe (7, 8, 9) zugeordnet ist,
- **dass** jeder Auswertestufe (7, 8, 9) ein Spannungstrennelement (10, 11, 12) nachgeschaltet ist,
- **dass** jedes der Spannungstrennelemente (10, 11, 12) sowohl mit einer Speicherstufe (13, 14, 15) als auch über eine Oderstufe (22) mit der Ablaufsteuerung (23) und der Zeitstufe (24) der Vorrichtung verbunden ist, und
- **dass** ein Verstärker (25) zur Stromabfrage vorgesehen ist, der über die Ablaufsteuerung (23) bei vorhandenem Strom die Speicherstufen (13, 14, 15) zurücksetzt.

2. Vorrichtung nach Anspruch 1,
**dadurch gekennzeichnet, dass**
als Spannungstrennelemente (10, 11, 12) Optokoppler eingesetzt sind.

3. Vorrichtung nach Anspruch 1 oder 2,
**dadurch gekennzeichnet, dass**
die Anzeigeeinheit aus mechanischen Schauzeichen (19, 20, 21) besteht, dass diese über Treiberstufen (16, 17, 18) gesetzt werden, und dass eine weitere von der Zeitstufe (24) aktivierte Treiberstufe (32) einen Rücksetzimpuls liefert.

4. Vorrichtung nach Anspruch 3,
**dadurch gekennzeichnet, dass**
zur Verringerung des Stromverbrauches sämtliche Treiberstufen (16, 17, 18, 28, 32) nur während der Bedarfszeit von einem Gleichspannungswandler (31) versorgt werden, wobei vorzugsweise die gesamte Auswerteelektronik von einer Lithiumbatterie (33) gespeist ist.

5. Vorrichtung nach einem der Ansprüche 1 bis 4,
**dadurch gekennzeichnet, dass**
die genannten Schaltungselemente in einem programmierbaren Schaltkreis (Mikrokontroller) zusammengefasst sind.

6. Vorrichtung nach einem der Ansprüche 1 bis 5,
**dadurch gekennzeichnet, dass**
die Optokoppler (10, 11, 12) mit Glasfasersignalstrecken zur Erhöhung der Spannungsfestigkeit ausgerüstet sind.

7. Vorrichtung nach einem der Ansprüche 1 bis 6,
**dadurch gekennzeichnet, dass**
die Meßwertgeber (1, 2, 3) mit Hallgeneratoren ausgestattet sind.

8. Vorrichtung nach einem der Ansprüche 1 bis 7,
**dadurch gekennzeichnet, dass**
zur Spannungsversorgung das Niederspannungsnetz eingesetzt ist und dass ein Speicherkondensator als Zwischenspeicher dient, der im Falle der Anregung die Schauzeichen (19, 20, 21) setzt.

9. Vorrichtung nach einem der Ansprüche 1 bis 8,
**dadurch gekennzeichnet, dass**
zur Femmeldung eine Relais (29) oder ein Halbleiterschalter (z. B. Open-Coilector-Transistor) dient, oder dass die Femmeldung des Anregezustandes über einen Funksignalgeber, Lichtwellenleiter oder eine Infrarotlichtübertragung erfolgt, wobei das Signal drahtlos oder leitungsgebunden potentialfrei übertragen wird.

10. Vorrichtung nach einem der Ansprüche 1 bis 9,
**dadurch gekennzeichnet, dass**
die Anzeigeeinheit (19, 20, 21) als LED-Anzeige oder Flüssigkristallanzeige ausgebildet ist.

11. Vorrichtung nach einem der Ansprüche 1 bis 10,
**dadurch gekennzeichnet, dass**
die Anzeigeeinheit periodisch oder auf Abruf den Betriebsstrom, die Betriebsspannung, die Niederspannung, die Batteriespannung und/oder die Betriebsfrequenz sowie ggf. die Phasenlage anzeigt.

12. Vorrichtung nach einem der Ansprüche 1 bis 11,
**dadurch gekennzeichnet, dass**
das Vorhandensein der Netzspannung durch eine Blinkdiode oder ein LCD angezeigt ist.

13. Vorrichtung nach einem der Ansprüche 1 bis 12,
**dadurch gekennzeichnet, dass**
ein Prozessor Betriebsdaten des Versorgungsnetzes aufnimmt, die gespeichert werden und im Bedarfsfall zur Analyse bzw. Statistik ausgewertet werden können.

## Claims

1. Device for rapid error location in polyphase electrical distribution mains with sensors and rectifiers connected to a signal storage unit, a signal processing unit and a display unit, whereby a DC signal present in the inlet area is fed to an evaluation stage (7) that emits a signal in the event of rapid current changes, and a process control unit (23) and a time stage (24) are present in order to eliminate the signal from transient current overloads, so constructed that the process control unit (23) complies with a "pulse / pause / zero condition", so that after a pulse and a pause, a display command is only transmitted if the phase current measured after the pulse had the value zero in a time window or for the duration of the entire reset time,
**whereby**
- an evaluation stage (7, 8, 9) is allocated to each phase conductor of the electrical distribution mains,
- a voltage separation element (10, 11, 12) is connected to each evaluation stage (7, 8, 9),
- each of the voltage separation elements (10, 11, 12) is connected both to a storage stage (13, 14, 15) and also to the process control unit (23) and the time stage (24) via an OR stage (22), and
- an amplifier (25) is provided for current sensing that resets the storage stages (13, 14, 15) via the process control unit (23) when current is present.

2. Device as per Claim 1
whereby
optocouplers are used as voltage separation elements (10, 11, 12)

3. Device as per Claim 1 or 2
whereby
the display unit consists of mechanical drop signals (19, 20, 21); these are set using driver stages (16, 17, 18), and a further driver stage (32) activated by the time stage (24) supplies a reset pulse.

4. Device as per Claim 3
whereby
to reduce power consumption, all driver stages (16, 17, 18, 28, 32) are supplied only during the demand time by a DC converter (31), the entire evaluation electronics preferably being supplied by a lithium battery (33).

5. Device as per one of Claims 1 to 4
whereby
the circuit elements indicated are grouped together in a programmable switching circuit (microcontroller).

6. Device as per one of Claims 1 to 5
whereby
the optocouplers (10, 11, 12) are equipped with glass fibre signal runs for increasing voltage stability.

7. Device as per one of Claims 1 to 6
whereby
sensors (1, 2, 3) are equipped with Hall generators.

8. Device as per one of Claims 1 to 7
whereby
the low-tension network is used for power supply and a storage capacitor is used as a buffer and sets the drop signals (19, 20, 21) in the event of excitation.

9. Device as per one of Claims 1 to 8
whereby
a relay (29) or a static switch (e.g. open collector transistor) is used for telecommunication, or telecommunication of the excitation state is achieved by a radio signal transmitter, optical waveguide or infra-red transmission, the signal being transmitted by wireless or by wire with zero potential.

10. Device as per one of Claims 1 to 9
whereby
the display unit (19, 20, 21) is in the form of an LED display or a liquid crystal display.

11. Device as per one of Claims 1 to 10
whereby
the display unit periodically or on request displays the operating current, operating voltage, low voltage, battery voltage and/or the operating frequency and the phase position if applicable.

12. Device as per one of Claims 1 to 11
whereby
the presence of mains voltage is displayed by a flashing diode or an LCD.

13. Device as per one of Claims 1 to 12
whereby
a processor records the power supply network operating data that can be logged and evaluated as required for analytical or statistical purposes.

## Revendications

1. Dispositif pour la localisation rapide des défauts dans des réseaux à courants forts polyphasés, comprenant des émetteurs de valeurs mesurées et des redresseurs en aval desquels sont connectés des mémoires de signaux, une unité d'exploitation de signaux et une unité d'affichage, un signal de courant continu présent dans la région d'entrée étant envoyé à un étage de traitement (7), lequel émet un signal en réponse à des variations rapides du courant, ainsi qu'une commande de processus (23) et qu'un étage de temps (24) destiné à éliminer le signal de surintensités transitoires, et plus précisément de telle manière que la commande de processus (23) écoute une « condition impulsion/pause/zéro », de sorte qu'après une impulsion et une pause, un ordre d'affichage est transmis uniquement lorsqu'une intensité de phase mesurée après la pause a eu la valeur zéro dans une fenêtre de temps ou pendant la durée du temps total de remise à l'état initial, **caractérisé**
- **en ce qu'**à chaque conducteur de phase du réseau de courants forts, est associé un étage de traitement (7, 8, 9),
- **en ce qu'**en aval de chaque étage d'exploitation (7, 8, 9) est connecté un élément isolateurde tension (10, 11, 12),
- **en ce que** chacun des éléments isolateurs de tension (10, 11, 12) est connecté à la fois à un étage de mémoire (13, 14, 15) et, par l'intermédiaire d'une porte OU (22), à l'étage de processus (23) et à l'étage de temps (24) du dispositif, et
- **en ce qu'**un amplificateur (25) est prévu pour l'interrogation de l'intensité, lequel remet les étages de mémoire (13, 14, 15) à l'état initial par l'intermédiaire de la commande de processus (23) en présence d'une intensité.

2. Dispositif selon la revendication 1, **caractérisé**
**en ce que** des optocoupleurs sont prévus en tant qu'éléments isolateurs de tension (10, 11, 12).

3. Dispositif selon la revendication 1 ou 2, **caractérisé**
**en ce que** l'unité d'affichage est composé d'indicateurs optiques mécaniques (19, 20, 21), en ce que ces derniers sont mis par l'intermédiaire d'étages d'attaque (16, 17, 18) et en ce qu'un autre étage d'attaque (32) activé par l'étage à temps (24) fournit une impulsion de remise à l'état initial.

4. Dispositif selon la revendication 3, **caractérisé**
**en ce que**, pour réduire la consommation de courant, tous les étages d'attaque (16, 17, 18, 28, 32) sont alimentés seulement pendant le temps nécessaire par un convertisseur de tension continue (31), la totalité de l'électronique d'exploitation étant de préférence alimentée par une batterie au lithium (33).

5. Dispositif selon une des revendications 1 à 4, **caractérisé**
**en ce que** les éléments de commutation précités sont regroupés dans un circuit de commutation programmable (micro-contrôleur).

6. Dispositif selon une des revendications 1 à 5, **caractérisé**
**en ce que** les optocoupleurs (10, 11, 12) sont équipés de conducteurs de signaux en fibre de verre pour renforcer la tenue en tension.

7. Dispositif selon une des revendications 1 à 6, **caractérisé**
**en ce que** les émetteurs de valeurs mesurées (1, 2, 3) sont équipés de générateurs à effet Hall.

8. Dispositif selon une des revendications 1 à 7, **caractérisé**
**en ce que** le réseau de basse tension est mis en oeuvre pour l'alimentation en tension et en ce qu'un condensateur mémoire sert de mémoire auxiliaire qui met les indicateurs optiques (19, 20, 21) dans le cas de l'excitation.

9. Dispositif selon une des revendications 1 à 8, **caractérisé**
**en ce que**, pour l'avertissement à distance, il est prévu un relais (29) ou un interrupteur à semi-conducteur (par exemple un transistor à collecteur ouvert) ou encore en ce que l'avertissement à distance de l'état d'excitation s'effectue par l'intermédiaire d'un émetteur de signaux radio, d'un guide d'ondes lumineuses ou par transmission en lumière infrarouge, le signal étant transmis sans potentiel, sans fil ou par conducteur.

10. Dispositif selon une des revendications 1 à 9, **caractérisé**
**en ce que** l'unité d'affichage (19, 20, 21) est constituée par un affichage à DEL ou à cristaux liquides.

11. Dispositif selon une des revendications 1 à 10, **caractérisé**
**en ce que** l'unité d'affichage affiche périodiquement, ou sur appel, le courant de service, la tension de service, la basse tension, la tension de la batterie et/ou la fréquence de service, ainsi qu'éventuellement la position de phase.

12. Dispositif selon une des revendications 1 à 11, **caractérisé**
**en ce que** la présence de la tension du réseau est indiquée par une diode clignotante ou un LCD.

13. Dispositif selon une des revendications 1 à 12, **caractérisé**
**en ce qu'**un processeur reçoit des données de service du réseau d'alimentation qui sont mémorisées et qui peuvent être exploitées pour l'analyse ou la statistique en cas de besoin.
